# FASCICULE DE BREVET EUROPEEN

(11) **EP 3 272 491 B1**
(45) Date de publication et mention de la délivrance du brevet: **12.12.2018**
(21) Numéro de dépôt: 17306356.1
(22) Date de dépôt: 09.10.2017
(51) Int. Cl.: B29C 49/42, B29C 49/78, F16P 3/08

(54) **PROCEDE DE CONTROLE D'UNE INSTALLATION DE MANUTENTION AVEC SECURISATION DES ACCES POUR LA MAINTENANCE**
STEUERUNGSVERVERFAHREN VON HERSTELLUNGSVORRICHTUNG MITTELS SICHERUNG DES ZUGANGS FÜR WARTUNG
METHOD OF CONTROL OF A MANUFACTURING INSTALLATION BY SAFEGUARDING AN ACCESS TO MAINTENANCE WORKS

(30) Priorité: 12.10.2016 FR 1659844
(43) Date de publication de la demande: 24.01.2018
(73) Titulaire: Sidel Participations, 76930 Octeville-sur-Mer (FR)
(72) Inventeur: MARAN, Christophe, 76930 Octeville-sur-mer (FR); DANEL, Laurent, 76930 Octeville-sur-mer (FR); MOULIN, Sébastien, 76930 Octeville-sur-mer (FR); PETIT, Fabian, 76930 Octeville-sur-mer (FR)
(74) Mandataire: Grassin d'Alphonse, Emmanuel Jean Marie

(56) Documents cités:
- EP-A1- 0 940 343
- EP-A1- 2 778 082
- DE-A1-102007 047 733
- US-A1- 2013 211 575

## Description

L'invention a trait au contrôle des installations de manutention, et en particulier des installations de manutention de corps creux, telles que les installations de production de récipients à partir de préformes en matière plastique.

Ce type d'installation comprend plusieurs unités de traitement qui réalisent chacune au moins une opération sur les corps creux.

Ainsi, une installation de production de récipients comprend classiquement :
- une unité de conditionnement thermique des préformes, conçue pour chauffer les préformes au moyen de sources infrarouge à une température supérieure à la température de transition vitreuse de la matière (dans le cas du polytéréphtalate d'éthylène ou PET, dont la température de transition vitreuse est de 80°C environ, la température de chauffe des préformes est généralement de 120°C environ) ;
- une unité de formage des récipients par soufflage ou étirage soufflage des préformes chaudes ;
- éventuellement une unité de rinçage des récipients ainsi formés ;
- éventuellement une unité de traitement par plasma des récipients formés ;
- une unité de remplissage des récipients formés (et éventuellement rincés) avec un produit (par ex. une boisson) ;
- une unité de bouchage des récipients remplis ;
- une unité d'étiquetage des récipients bouchés.

Les unités de traitement sont montées en série, et un système de transfert assure le transit des préformes ou des récipients de l'une à l'autre. Chaque dispositif de transfert se présente ordinairement sous forme d'une roue équipée, à sa périphérie, de pinces qui saisissent les préformes (ou les récipients) à la sortie d'une unité de traitement donnée et les délivrent à l'unité de traitement suivante, après un parcours en arc de cercle.

Une telle installation est équipée d'une unité de contrôle qui en pilote le fonctionnement en contrôlant divers paramètres de production pour les unités de traitement (par ex. la puissance de rayonnement des sources dans l'unité de conditionnement thermique ou encore les instants d'ouverture d'électrovannes dans l'unité de formage).

En fonctionnement, les parties mobiles des unités de traitement et du système de transfert se déplacent, suivant un trajet circulaire ou linéaire, selon l'architecture choisie, à très haute vitesse. Ainsi, un carrousel d'une unité de formage ou de traitement par plasma, d'un diamètre de 5 m environ, équipée de 24 postes de traitement et assurant une cadence de 55 000 récipients par heure, tourne à une vitesse de 34 tr/min, soit, pour chaque poste de traitement, une vitesse linéaire de 10 m/s environ.

Les abords des unités de traitement et du système de transfert en fonctionnement sont donc particulièrement dangereux pour les personnels. C'est pourquoi ce type d'installation est équipé d'un capotage définissant une enceinte fermée dans laquelle sont logées les unités de traitement et le système de transfert.

Un tel capotage comprend classiquement un châssis (par exemple tubulaire) qui, dans certaines zones, définit des dormants, et des ouvrants montés sur ces dormants pour, dans une position fermée, interdire l'accès à l'enceinte (notamment pendant le fonctionnement de la machine) et, dans une position ouverte, donner accès, par l'extérieur, à une zone de l'installation nécessitant une intervention de maintenance.

Pour éviter une ouverture intempestive pendant le fonctionnement de la machine, le capotage est en général équipé, pour chaque ouvrant, d'un système de verrouillage de l'ouvrant en position fermée, typiquement sous forme d'une serrure à clé.

Le verrouillage peut être piloté à distance, comme décrit dans la demande de brevet américain US 2013/0211575 (Krones).

Dans certaines installations, au moins l'une des unités de traitement peut être arrêtée et débrayée du système de transfert tandis que les autres unités de traitement (et le système de transfert) demeurent en fonctionnement.

Ainsi, dans les installations adaptées à la production de récipients qui subissent un traitement par plasma pour former une couche barrière interne (voir par ex. la demande de brevet européen EP 2 077 919 au nom de Sidel Participations), l'unité de traitement par plasma peut être isolée du reste de l'installation, notamment lorsque celle-ci doit être utilisée pour produire des récipients sans couche barrière.

Dans ce cas, le temps d'arrêt de l'unité de traitement par plasma peut être mis à profit pour assurer sa maintenance. Mais les opérations de maintenance sont risquées pour le personnel, en raison de la proximité du système de transfert qui reste en fonctionnement et représente par conséquent un danger de blessure.

Il existe donc un besoin de sécuriser les accès aux installations de manutention.

A cet effet, il est proposé, en premier lieu, un procédé de contrôle d'une installation de manutention de corps creux, qui comprend :
- une pluralité d'unités de traitement des corps creux ;
- un système de transfert des corps creux entre les unités de traitement,
- un capotage définissant une enceinte fermée dans laquelle sont logées les unités de traitement et le système de transfert, ce capotage comprenant :
   ∘ un châssis définissant des dormants,
   ∘ des ouvrants montés chacun sur un dormant entre une position ouverte dans laquelle l'ouvrant donne accès à l'enceinte par l'extérieur, et une position fermée dans laquelle l'ouvrant interdit l'accès à l'enceinte par l'extérieur ;
   ∘ pour chaque ouvrant, un système de verrouillage de l'ouvrant en position fermée ;
- une unité de contrôle ;
ce procédé comprenant les opérations suivantes :
- détection par l'unité de contrôle de l'arrêt d'une unité de traitement ;
- détection par l'unité de contrôle de la position fermée d'ouvrants situés au voisinage d'une jonction entre l'unité de traitement détectée en arrêt et le système de transfert ;
- si ces ouvrants sont détectés en position fermée, commande par l'unité de contrôle du verrouillage de ces ouvrants.

De la sorte, les personnels ne peuvent accéder aux zones de jonction entre l'unité de traitement à l'arrêt et le système de transfert, dont le fonctionnement (et le mouvement) se poursuit. Il en résulte une meilleure sécurisation des zones de travail autour de l'unité de traitement.

Selon un mode particulier de réalisation, le procédé de contrôle comprend en outre l'opération suivante :
- si un ouvrant situé au droit de l'unité de traitement détectée à l'arrêt et à distance d'une jonction avec le système de transfert est détecté comme verrouillé en position fermée, déverrouillage de cet ouvrant.

L'opération suivante peut en outre être prévue :
- génération d'un signal d'alerte de verrouillage pour tout ouvrant verrouillé.

Selon un mode de réalisation, le signal d'alerte se traduit par l'éclairage d'un témoin lumineux au voisinage de l'ouvrant verrouillé en position fermée.

Installation de manutention de corps creux, qui comprend
- une pluralité d'unités de traitement des corps creux ;
- un système de transfert des corps creux entre les unités de traitement,
- un capotage définissant une enceinte fermée dans laquelle sont logées les unités de traitement et le système de transfert, ce capotage comprenant :
   ∘ un châssis définissant des dormants,
   ∘ des ouvrants montés chacun sur un dormant entre une position ouverte dans laquelle l'ouvrant donne accès à l'enceinte par l'extérieur, et une position fermée dans laquelle l'ouvrant interdit l'accès à l'enceinte par l'extérieur ;
   ∘ pour chaque ouvrant, un système de verrouillage de l'ouvrant en position fermée ;
- une unité de contrôle programmée pour :
   ∘ détecter l'arrêt d'une unité de traitement ;
   ∘ détecter la position fermée d'ouvrants situés au voisinage d'une jonction entre l'unité de traitement détectée en arrêt et le système de transfert ;
   ∘ si ces ouvrants sont détectés en position fermée, commander le verrouillage de ces ouvrants.

Selon un mode particulier de réalisation, le système de verrouillage comprend un contacteur ou un capteur de proximité monté sur le dormant et relié à l'unité de contrôle.

Le système de verrouillage comprend par exemple une serrure électromécanique montée sur le dormant et incluant :
- un pêne mobile entre une position de verrouillage dans laquelle il coopère avec une gâche portée par l'ouvrant, et une position de libération dans laquelle il est écarté de la gâche ;
- un mécanisme de blocage du pêne en position de verrouillage, relié à l'unité de contrôle et commandé par celle-ci.

D'autres objets et avantages de l'invention apparaîtront à la lumière de la description d'un mode de réalisation, faite ci-après en référence aux dessins annexés dans lesquels :
- la **FIG.1** est une vue schématique de dessus d'une installation de production de récipients à partir de préformes en matière plastique ;
- la **FIG.2** est une vue de détail, à plus grande échelle, de la machine de la **FIG.1****,** prise dans l'encart 1 ;
- la **FIG.3** est une vue en perspective montrant une partie du capotage de la machine avec des ouvrants donnant accès à l'enceinte ; deux des ouvrants sont représentés en position ouverte en pointillés ;
- la **FIG.4** est une vue en perspective montrant des ouvrants et un système de verrouillage de ceux-ci en position fermée ;
- la **FIG.5** est une vue de détail prise dans le médaillon V de la **FIG.4** et montrant le système de verrouillage à plus grande échelle.

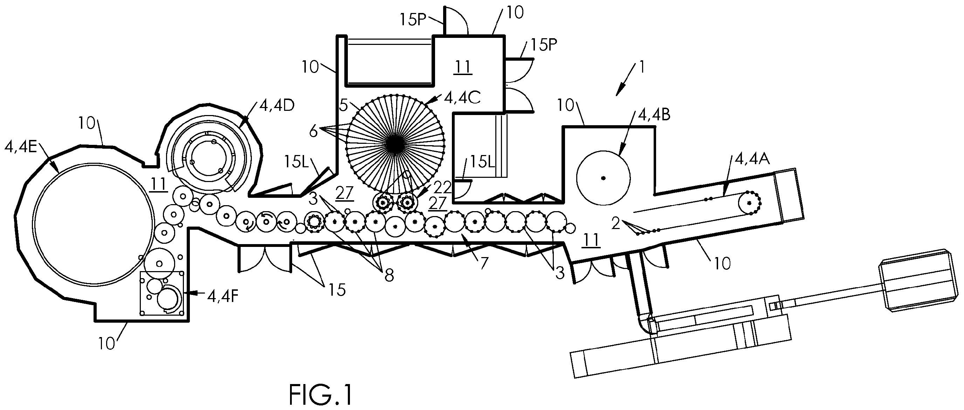

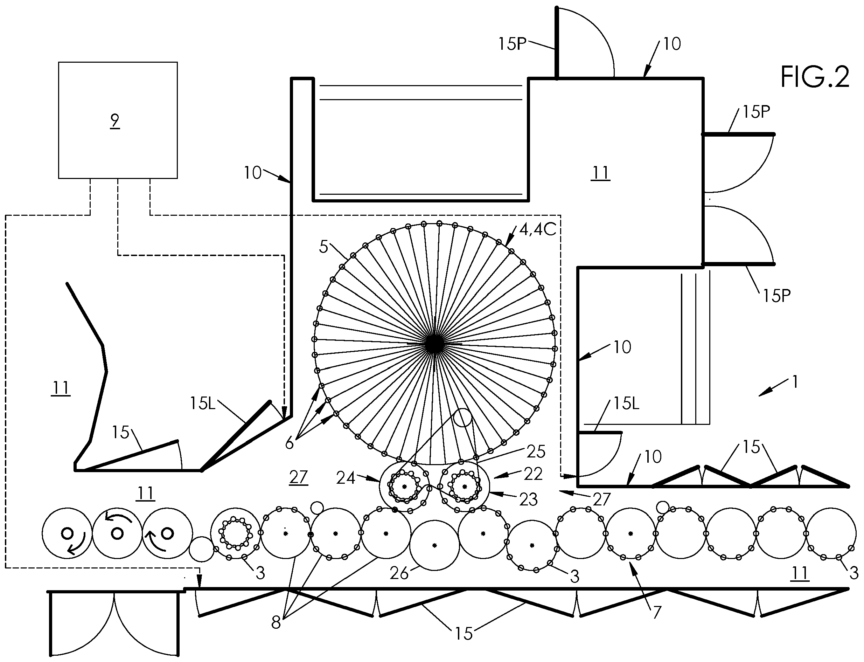

Sur la **FIG.1** et la **FIG.2** est représentée une installation **1** de manutention de corps **2, 3** creux en matière plastique. Il peut notamment s'agir d'une ligne de production de récipients **3** à partir de préformes **2** en matière plastique, typiquement en polytéréphtalate d'éthylène (PET). L'expression « corps creux » désigne dans ce cas indifféremment les préformes **2** ou les récipients **3** qui sont formés à partir de celles-ci. Le nombre et le positionnement des corps **2, 3** creux tracés sur la **FIG.1** et la **FIG.2** n'ont qu'une vocation d'illustration et ne rendent compte ni de l'échelle ni de la capacité de l'installation **1.** Dans ce qui suit, les termes « installation » et « ligne » sont synonymes.

L'installation **1** comprend, en premier lieu, une pluralité d'unités **4** de traitement des corps **2, 3** creux, qui définissent chacune pour ceux-ci un circuit **5** de traitement qui s'étend entre un point d'entrée où les corps **2, 3** creux sont introduits dans l'unité **4** de traitement et un point de sortie où les corps **2, 3** creux sont évacués de l'unité **4** de traitement.

Une ligne typique de production de récipients **3** à partir de préformes **2** comprend une série d'unités **4** de traitement prévues chacune pour réaliser sur les préformes **2** ou les récipients **3** une fonction particulière, à savoir :
- une unité **4A** de conditionnement thermique des préformes **2** (également appelée four), configurée pour porter les préformes **2** à une température supérieure à la température de transition vitreuse de la matière (dans le cas du PET, dont la température de transition vitreuse est de 80°C environ, la température de chauffe des préformes est ordinairement de 120°C environ) ; cette unité **4A** de conditionnement thermique comprend ordinairement une série de sources de rayonnement infrarouge (typiquement des lampes halogène) devant lesquelles les préformes **2** sont transportées au défilé, mais on peut imaginer des postes individuels de chauffe montés sur une roue ;
- une unité **4B** de formage des récipients **3** par soufflage ou étirage soufflage (également appelée souffleuse), qui comprend typiquement un carrousel et, montés sur celui-ci, une pluralité de moules à l'empreinte des récipients **3** ;
- le cas échéant, une unité **4C** de traitement des récipients **3** par plasma pour déposer sur leur paroi interne une mince couche d'espèces carbonées formant une couche barrière interne à l'air ; cette unité **4C** de traitement par plasma comprend ici un carrousel **5** et une pluralité de postes **6** de traitement des récipients **3** montés sur celui-ci ;
- une unité **4D** de remplissage (également appelée remplisseuse) qui comprend typiquement un carrousel et, montées sur celui-ci, une pluralité de vannes de distribution d'un produit (notamment alimentaire, typiquement une boisson) dans les récipients **3** ;
- une unité **4E** de bouchage (également appelée boucheuse), qui comprend un carrousel et, montés sur celui-ci, des applicateurs de bouchons pour fermer de manière étanche les récipients **3** préalablement remplis ;
- une unité **4F** d'étiquetage (également appelée étiqueteuse) configurée pour appliquer sur chaque récipient **3** rempli et bouché une étiquette à valeur informative.

Ces unités **4** de traitement sont évoquées à titre illustratif et non limitatif. D'autres unités de traitement pourraient être prévues, comme une unité de rinçage et une unité de séchage, interposées entre l'unité **4B** de formage et l'unité **4D** de remplissage. En outre, l'ordre dans lequel les unités **4A** à **4F** de traitement indiqué ci-dessus ne doit pas être considéré comme limitatif. Ainsi, l'unité 4F d'étiquetage pourrait être interposée entre l'unité **4B** de formage et l'unité **4D** de remplissage.

L'installation **1** comprend, en deuxième lieu, un système **7** de transfert des corps **2, 3** creux entre les unités **4** de traitement. Dans l'exemple illustré, ce système **7** de transfert comprend une pluralité de roues **8** de transfert montées en série et définissant un parcours de transfert qui relie les différentes unités **4** de traitement.

En pratique, chaque roue **8** de transfert porte, à sa périphérie, une série de pinces de préhension propres à saisir un corps creux (préforme **2** ou récipient **3**) et à le déplacer sur un trajet en arc de cercle depuis une autre roue **8** de transfert (ou une unité **4** de traitement) située en amont, jusqu'à encore une autre roue **8** de transfert (ou une autre unité **4** de traitement) située en aval. Les flèches tracées en bas et à gauche sur la **FIG.2** illustrent le sens de rotation de ces roues **8** de transfert.

L'installation **1** comprend, en troisième lieu, une unité **9** de contrôle informatisée reliée à certaines au moins des parties de l'installation **1** et dotée d'instructions programmées pour assurer un pilotage au moins partiel de celle-ci. L'unité **9** de contrôle peut être programmée ou surveillée via une interface homme-machine (tel qu'un écran tactile ou une console écran-clavier). L'unité **9** de contrôle peut ainsi, de manière non limitative, commander/contrôler/réguler :
- l'entraînement synchrone des unités **4** de traitement et du système de transfert,
- la puissance de radiation des sources dans l'unité **4A** de conditionnement thermique,
- l'ouverture et la fermeture d'électrovannes de soufflage des récipients dans l'unité **4B** de formage,
- l'ouverture et la fermeture d'électrovannes d'injection d'un gaz précurseur dans l'unité **4C** de traitement par plasma,
- l'activation du plasma par micro-ondes dans l'unité **4C** de traitement par plasma.

Les unités **4** de traitement et le système **7** de transfert comprennent de nombreuses parties mobiles qui, en fonctionnement, sont dangereuses et dont les personnels doivent être maintenus à distance.

A cet effet, l'installation **1** comprend, en troisième lieu, un capotage **10** définissant une enceinte **11** fermée dans laquelle sont logées les unités **4** de traitement et le système **7** de transfert.

Ce capotage **10** comprenant un châssis **12,** qui peut être tubulaire et par ex. réalisé par assemblage de profilés d'aluminium, tels que proposés par la société ITEM.

Dans certaines parties, le capotage **10** forme un support pour des panneaux **13** fixes. Dans d'autres parties, et notamment au droit des unités **4** de traitement et, localement au moins, au droit du système **7** de transfert, le capotage définit des dormants **14.**

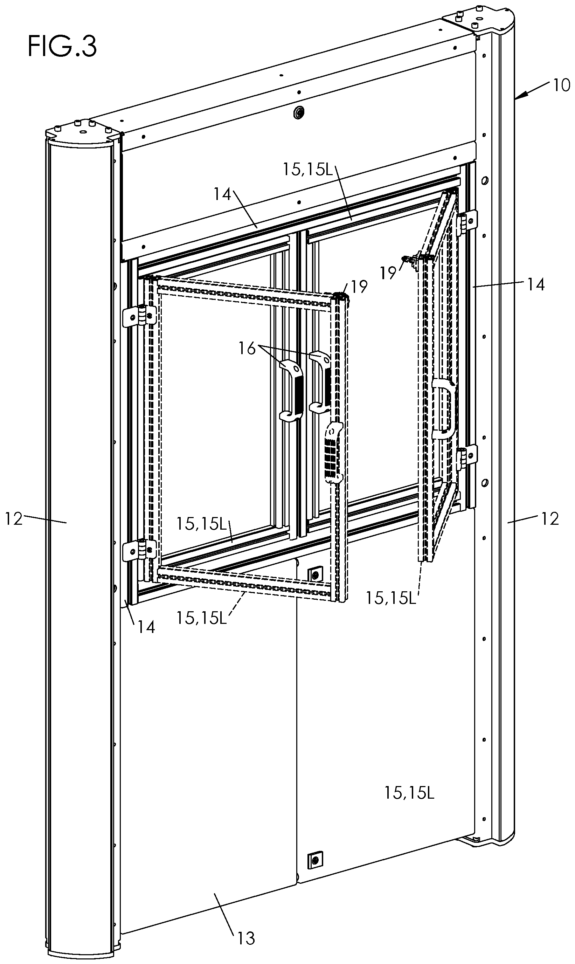

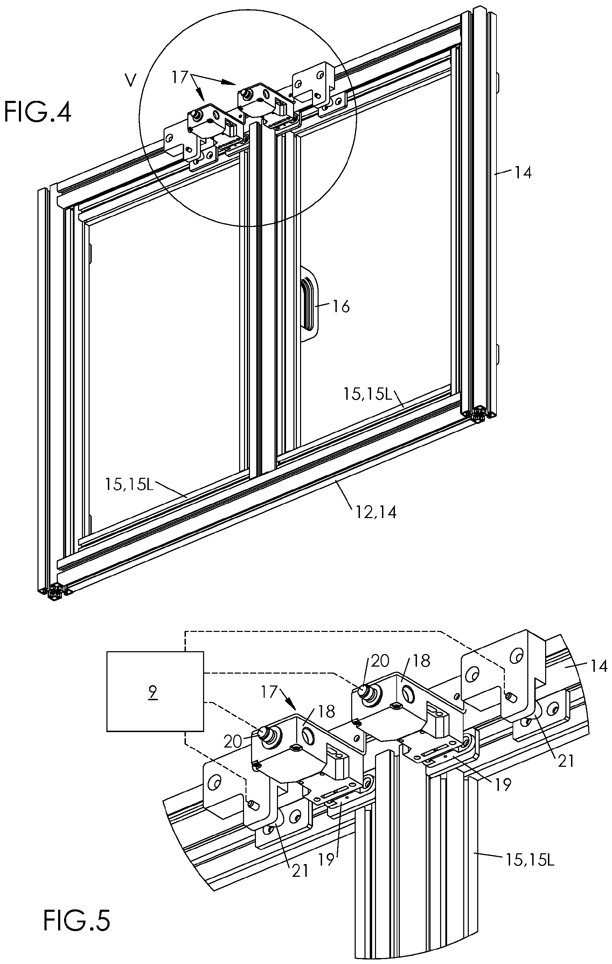

Le capotage **10** comprend par ailleurs des ouvrants **15** (porte ou fenêtre) montés chacun sur un dormant **14** entre une position ouverte (illustrée en pointillés sur la **FIG.3**) dans laquelle l'ouvrant **15** donne accès à l'enceinte par l'extérieur, et une position fermée (en trait plein sur la **FIG.3**) dans laquelle l'ouvrant **15** interdit l'accès à l'enceinte **11** par l'extérieur. Sur la **FIG.1** et la **FIG.2****,** on a représenté les ouvrants à la façon schématique des dessins d'architecture. Sur la **FIG.3** et la **FIG.4****,** on a représenté des ouvrants **15** modulaires fabriqués par assemblage de profilés métalliques. Comme on le voit sur ces figures, chaque ouvrant **15** dispose avantageusement d'une poignée **16** permettant son ouverture manuelle.

Le capotage **10** comprend en outre, pour chaque ouvrant **15,** un système **17** de verrouillage de l'ouvrant **15** en position fermée.

Selon un mode de réalisation illustré sur les **FIG.4** et la **FIG.5****,** ce système **17** de verrouillage comprend une serrure **18** électromécanique montée sur le dormant **14** et incluant :
- un pêne mobile entre une position de verrouillage dans laquelle il coopère par crochetage avec une gâche **19** portée par l'ouvrant **15,** et une position de libération dans laquelle il est écarté de la gâche **19** ;
- un mécanisme **20** de blocage du pêne en position de verrouillage, relié à l'unité **9** de contrôle et commandé par celle-ci.

Le système **17** de verrouillage comprend, par ailleurs, un capteur de proximité ou, comme dans l'exemple illustré sur **FIG.5****,** un contacteur **21,** monté sur le dormant **14** et relié à l'unité **9** de contrôle.

L'installation 1 comprend de nombreux ouvrants **15** répartis pour permettre un accès aussi aisé que possible à ses différents composants, de sorte à en faciliter la maintenance à l'arrêt complet. Ainsi, comme illustré sur la **FIG.2****,** le capotage **10** comprend des ouvrants **15** disposés :
- au droit des unités **4** de traitement,
- au droit du système **7** de transfert,
- à au moins une jonction entre le système **7** de transfert et l'une au moins des unités **4** de traitement.

Dans cette installation **1,** l'une au moins des unités **4** de traitement est accessoire et peut être débrayée du système **7** de transfert, c'est-à-dire que cette unité **4** de traitement peut être arrêtée alors même que le reste de la ligne **1** (c'est-à-dire les autres unités **4** de traitement et le système **7** de transfert) demeure en marche.

Dans l'exemple illustré, l'unité **4** de traitement accessoire est l'unité **4C** de traitement par plasma. On voit que l'installation **1** comprend un dispositif **22** d'accouplement de l'unité **4C** de traitement accessoire au système **7** de transfert.

Dans l'exemple illustré, ce dispositif **22** d'accouplement comprend une roue **23** d'entrée et une roue **24** de sortie toutes deux interposées entre le carrousel **5** et le système **7** de transfert et assurant respectivement :
- le prélèvement, sur le système **7** de transfert, des récipients **3** formés, et leur introduction dans l'unité **4C** de traitement accessoire ;
- l'éjection des récipients **3** traités de l'unité **4C** de traitement accessoire et leur réintroduction dans le système **7** de transfert.

Comme on le voit sur la **FIG.2****,** le dispositif **22** d'accouplement comprend un mécanisme **25** d'entraînement synchrone de la roue **23** d'entrée et de la roue **24** de sortie, ici sous forme d'une courroie ou d'une chaîne qui circule d'une part sur des pignons menés portés par les roues et d'autre part sur une poulie menante solidaire d'un moteur.

L'arrêt de l'unité **4C** de traitement accessoire peut être réalisé par l'interruption de l'alimentation de son système d'entraînement (typiquement un moteur électrique). Dans ce cas, l'unité **4C** de traitement accessoire est débrayée du système **7** de transfert par désactivation du dispositif **22** d'accouplement. A cet effet, celui-ci peut être écarté (par ex. par un mouvement de translation verticale) du système **7** de transfert, de sorte à débrayer des roues **8** de transfert les roues **23** d'entrée et **24** de sortie. Dans ce cas, les corps **2, 3** creux ne transitent plus par l'unité **4C** de traitement accessoire mais la court-circuitent en poursuivant leur trajet via une roue **26** de by-pass assurant la jonction entre la portion du système **7** de transfert située en amont de l'unité **4C** de traitement accessoire et la portion située en aval.

Comme on le voit sur la **FIG.2****,** au moins un ouvrant **15P,** dit principal, est prévu au droit de l'unité **4C** de traitement accessoire à distance du système **7** de transfert.

Comme on le voit sur la **FIG.2****,** au moins un ouvrant **15L,** dit limitrophe, est par ailleurs prévu au voisinage d'une jonction **27** entre l'unité **4C** de traitement accessoire et le système **7** de transfert. En pratique, dans l'exemple illustré, au moins deux ouvrants **15L** limitrophes sont prévus de part et d'autre de l'unité 4C de traitement, au voisinage de ses jonctions **27** amont et aval avec le système **7** de transfert.

Pour éviter tout risque de blessure d'un opérateur dépêché pour procéder à une intervention sur l'unité **4C** de traitement accessoire arrêtée tandis que le reste de la ligne **1** (et en particulier le système **7** de transfert) demeure en fonctionnement, il est choisi de lui en interdire l'accès par les ouvrants **15L** limitrophes.

A cet effet, l'unité **9** de contrôle détecte l'arrêt d'une unité **4** de traitement (ici de l'unité **4C** de traitement accessoire).

L'unité **9** de contrôle détecte également le fonctionnement du système **7** de transfert. Cette détection peut être réalisée au moyen de capteurs de mouvement sur l'une au moins des roues **8** de transfert, ou par contrôle du mouvement d'un moteur d'entraînement du système **7** de transfert.

L'unité **9** de contrôle détecte alors la position fermée de l'ouvrant **15L** limitrophe (ou des ouvrants **15L** limitrophes) de l'unité **4** de traitement détectée en arrêt.

En pratique, cette détection est réalisée via le contacteur **21** (ou le capteur de proximité) monté sur le dormant **14.**

Puis, si cet ouvrant **15L** (ou ces ouvrants **15L**) est détecté (sont détectés) en position fermée, l'unité **9** de contrôle commande le verrouillage de cet ouvrant **15L** (de ces ouvrants **15L**) en position fermée.

En pratique, l'unité **9** de contrôle pilote le mécanisme **20** de blocage du pêne en position de verrouillage pour le maintenir en crochetage avec la gâche **19** portée par l'ouvrant **15L.**

Pour avertir les personnels du verrouillage de tout ouvrant **15** (et plus particulièrement de tout ouvrant **15L** limitrophe) en position fermée, l'unité **9** de contrôle peut être programmée pour générer un signal d'alerte de verrouillage. Ce signal d'alerte se traduit par exemple par l'éclairage d'un témoin lumineux au voisinage de l'ouvrant **15L** verrouillé en position fermée. Ce témoin peut être porté par l'ouvrant **15L** lui-même (par ex. sur la poignée **16**) ou monté sur le dormant **14.**

L'accès par l'ouvrant **15P** principal (ou les ouvrants **15P** principaux) doit cependant demeurer possible.

A cet effet, l'unité **9** de contrôle est avantageusement programmée pour vérifier si tout ouvrant **15P** principal de l'unité **4** de traitement détectée à l'arrêt est ouvert ou fermé (via son contacteur **21**) et, l'hypothèse où l'ouvrant **15P** principal est détecté en position fermée, pour vérifier s'il est verrouillé dans cette position. Dans ce cas, l'unité 9 de contrôle est programmée pour déverrouiller l'ouvrant **15P,** de sorte à en permettre l'ouverture et l'accès à l'unité **4C** de traitement.

Grâce au verrouillage des ouvrants **15L** limitrophes, les opérateurs ne sont plus tentés d'intervenir sur une unité **4** de traitement à l'arrêt dans les dangereuses zones de jonction avec le système **7** de transfert lorsque celui-ci est demeuré en fonctionnement.

Il en résulte une meilleure sécurisation des accès à la ligne **1,** et en particulier la possibilité d'intervenir sans risque sur une unité **4** de traitement à l'arrêt alors même que le reste de la ligne **1** (et en particulier le système **7** de transfert) demeure en fonctionnement.

## Revendications

1. Procédé de contrôle d'une installation **(1)** de manutention de corps **(2, 3)** creux, qui comprend :
- une pluralité d'unités **(4)** de traitement des corps **(2, 3)** creux ;
- un système **(7)** de transfert des corps **(2, 3)** creux entre les **(4)** unités de traitement,
- un capotage **(10)** définissant une enceinte **(11)** fermée dans laquelle sont logées les unités **(4)** de traitement et le système **(7)** de transfert, ce capotage **(10)** comprenant :
∘ un châssis **(12)** définissant des dormants **(14),**
∘ des ouvrants **(15)** montés chacun sur un dormant **(14)** entre une position ouverte dans laquelle l'ouvrant **(15)** donne accès à l'enceinte **(11)** par l'extérieur, et une position fermée dans laquelle l'ouvrant **(15)** interdit l'accès à l'enceinte **(11)** par l'extérieur ;
∘ pour chaque ouvrant **(15),** un système **(17)** de verrouillage de l'ouvrant **(15)** en position fermée ;
- une unité **(9)** de contrôle ;
ce procédé étant **caractérisé en ce qu'**il comprend les opérations suivantes :
- détection par l'unité **(9)** de contrôle de l'arrêt d'une unité **(4C)** de traitement ;
- détection par l'unité **(9)** de contrôle de la position fermée d'ouvrants **(15L)** situés au voisinage d'une jonction **(27)** entre l'unité **(4C)** de traitement détectée en arrêt et le système **(7)** de transfert ;
- si ces ouvrants **(15L)** sont détectés en position fermée, commande par l'unité **(9)** de contrôle du verrouillage de ces ouvrants **(15L).**

2. Procédé selon la revendication 1, **caractérisé en ce qu'**il comprend l'opération suivante :
- si un ouvrant **(15L)** situé au droit de l'unité **(4)** de traitement détectée à l'arrêt et à distance d'une jonction **(27)** avec le système **(7)** de transfert est détecté comme verrouillé en position fermée, déverrouillage de cet ouvrant.

3. Procédé selon la revendication 1 ou la revendication 2, **caractérisé en ce qu'**il comprend l'opération suivante :
- génération d'un signal d'alerte de verrouillage pour tout ouvrant **(15L)** verrouillé.

4. Procédé selon la revendication 3, **caractérisé en ce que** le signal d'alerte se traduit par l'éclairage d'un témoin lumineux au voisinage de l'ouvrant **(15L)** verrouillé en position fermée.

5. Installation **(1)** de manutention de corps creux, qui comprend
- une pluralité d'unités **(4)** de traitement des corps **(2, 3)** creux ;
- un système **(7)** de transfert des corps **(2, 3)** creux entre les **(4)** unités de traitement,
- un capotage **(10)** définissant une enceinte **(11)** fermée dans laquelle sont logées les unités **(4)** de traitement et le système **(7)** de transfert, ce capotage **(10)** comprenant :
∘ un châssis **(12)** définissant des dormants **(14),**
∘ des ouvrants **(15)** montés chacun sur un dormant **(14)** entre une position ouverte dans laquelle l'ouvrant **(15)** donne accès à l'enceinte **(11)** par l'extérieur, et une position fermée dans laquelle l'ouvrant **(15)** interdit l'accès à l'enceinte **(11)** par l'extérieur ;
∘ pour chaque ouvrant **(15),** un système **(17)** de verrouillage de l'ouvrant **(15)** en position fermée ;
- une unité **(9)** de contrôle ;
**caractérisée en ce que** l'unité **(9)** de contrôle est programmée pour :
- détecter l'arrêt d'une unité **(4C)** de traitement ;
- détecter la position fermée d'ouvrants **(15L)** situés au voisinage d'une jonction entre l'unité **(4C)** de traitement détectée en arrêt et le système **(7)** de transfert ;
- si ces ouvrants **(15L)** sont détectés en position fermée, commander le verrouillage de ces ouvrants **(15L).**

6. Installation **(1)** selon la revendication 5, **caractérisée en ce que** le système **(17)** de verrouillage comprend un contacteur **(21)** ou un capteur de proximité monté sur le dormant **(14)** et relié à l'unité **(9)** de contrôle.

7. Installation **(1)** selon la revendication 5 ou la revendication 6, **caractérisé en ce que** le système **(17)** de verrouillage comprend une serrure **(18)** électromécanique montée sur le dormant **(14)** et incluant :
- un pêne mobile entre une position de verrouillage dans laquelle il coopère avec une gâche **(19)** portée par l'ouvrant **(14),** et une position de libération dans laquelle il est écarté de la gâche **(19)** ;
- un mécanisme **(20)** de blocage du pêne en position de verrouillage, relié à l'unité **(9)** de contrôle et commandé par celle-ci.

## Patentansprüche

1. Steuerungsverfahren von einer Anlage (1) zur Handhabung von Hohlkörpern (2, 3), umfassend:
- mehrere Einheiten (4) zur Behandlung der Hohlkörper (2, 3),
- ein System (7) zum Transportieren der Hohlkörper (2, 3) zwischen den Einheiten (4) zur Behandlung,
- eine Verkleidung (10), die einen geschlossenen Behälter (11) definiert, in dem die Einheiten (4) zur Behandlung und das System (7) zum Transportieren untergebracht sind, wobei diese Verkleidung (10) aufweist:
∘ einen Rahmen (12), der Blendrahmen (14) definiert,
∘ Flügel (15), die jeweils an einem Blendrahmen (14) zwischen einer offenen Position, in der der Flügel (15) Zugang zu dem Behälter (11) von außen gewährt, und einer geschlossenen Position, in der der Flügel (15) den Zugang zu dem Behälter (11) von außen untersagt, befestigt sind;
∘ für jeden Flügel (15) ein System (17) zum Verriegeln des Flügels (15) in geschlossener Position;
- eine Steuereinheit (9);
wobei dieses Verfahren **dadurch gekennzeichnet ist, dass** es die folgenden Vorgänge aufweist:
- Erfassen durch die Steuereinheit (9) des Stillstands einer Einheit (4C) zur Behandlung;
- Erfassen durch die Steuereinheit (9) der geschlossenen Position von Flügeln (15L), die in der Nähe von einer Verbindung (27) zwischen der erfassten Einheit (4C) zur Behandlung im Stillstand und dem System (7) zum Transportieren angeordnet sind;
- wenn diese Flügel (15L) in der geschlossenen Position erfasst werden, Steuern durch die Steuereinheit (9) des Verriegelns dieser Flügel (15L).

2. Verfahren nach Anspruch 1, **dadurch gekennzeichnet, dass** es den folgenden Vorgang aufweist:
- wenn sich ein Flügel (15L), der sich rechts von der erfassten Einheit (4) zur Behandlung im Stillstand und beabstandet von einer Verbindung (27) mit dem System (7) zum Transportieren befindet, als in der geschlossenen Position verriegelt erfasst wird, Entriegeln dieses Flügels.

3. Verfahren nach Anspruch 1 oder 2, **dadurch gekennzeichnet, dass** es den folgenden Vorgang aufweist:
- Erzeugen eines Alarmsignals der Verriegelung für jeden verriegelten Flügel (15L).

4. Verfahren nach Anspruch 3, **dadurch gekennzeichnet, dass** sich das Alarmsignal durch das Aufleuchten einer Kontrollleuchte in der Nähe des in der geschlossenen Position verriegelten Flügels (15L) äußert.

5. Anlage (1) zur Handhabung von Hohlkörpern, die aufweist
- mehrere Einheiten (4) zur Behandlung der Hohlkörper (2, 3);
- ein System (7) zum Transportieren der Hohlkörper (2, 3) zwischen den Einheiten (4) zur Behandlung,
- eine Verkleidung (10), die einen geschlossenen Behälter (11) definiert, in dem die Einheiten (4) zur Behandlung und das System (7) zum Transportieren untergebracht sind, wobei diese Verkleidung (10) aufweist:
∘ einen Rahmen (12), der Blendrahmen (14) definiert,
∘ Flügel (15), die jeweils an einem Blendrahmen (14) zwischen einer offenen Position, in der der Flügel (15) Zugang zu dem Behälter (11) von außen gewährt, und einer geschlossenen Position, in der der Flügel (15) den Zugang zu dem Behälter (11) von außen untersagt, befestigt sind;
∘ für jeden Flügel (15) ein System (17) zum Verriegeln des Flügels (15) in geschlossener Position;
- eine Steuereinheit (9);
**dadurch gekennzeichnet, dass** die Steuereinheit (9) programmiert ist, um:
- den Stillstand einer Einheit (4C) zur Behandlung zu erfassen;
- die geschlossene Position von Flügeln (15L), die in der Nähe von einer Verbindung zwischen der erfassten Einheit (4C) zur Behandlung im Stillstand und dem System (7) zum Transportieren angeordnet sind, zu erfassen;
- wenn diese Flügel (15L) in der geschlossenen Position erfasst werden, Steuern des Verriegelns dieser Flügel (15L).

6. Anlage (1) nach Anspruch 5, **dadurch gekennzeichnet, dass** das System (17) zum Verriegeln einen Schütz (21) oder einen Näherungssensor aufweist, der auf dem Blendrahmen (14) befestigt ist und mit der Steuereinheit (9) verbunden ist.

7. Anlage (1) nach Anspruch 5 oder 6, **dadurch gekennzeichnet, dass** das System (17) zum Verriegeln ein elektromechanisches Schloss (18) aufweist, das auf dem Blendrahmen (14) befestigt ist und umfasst:
- einen Riegel, der zwischen einer Verriegelungsposition, in der er mit einem Schließblech (19) zusammenwirkt, das von dem Flügel (14) getragen ist, und einer Freigabeposition beweglich ist, in der er von dem Schließblech (19) entfernt ist;
- einen Mechanismus (20) zum Blockieren des Riegels in der Verriegelungsposition, der mit der Steuereinheit (9) verbunden ist und von dieser gesteuert wird.

## Claims

1. Method for controlling an installation **(1)** for handling hollow bodies **(2, 3),** which comprises:
- a plurality of units **(4)** for processing hollow bodies **(2, 3);**
- a system **(7)** for transferring the hollow bodies **(2, 3)** between the processing units **(4),**
- a cowl **(10)** defining a closed enclosure **(11)** in which are housed the processing units **(4)** and the transfer system **(7),** this cowl **(10)** comprising:
∘ a frame **(12)** defining fixed sashes **(14),**
∘ openings **(15)** each mounted on a fixed sash **(14)** between an open position in which the opening **(15)** gives access to the enclosure **(11)** from the outside, and a closed position in which the opening **(15)** prevents access to the enclosure **(11)** from the outside;
∘ for each opening **(15),** a system **(17)** for locking the opening **(15)** in closed position;
- a control unit **(9);**
this method being **characterized in that** it comprises the following operations:
- detection by the control unit **(9)** of the shutting down of a processing unit **(4C);**
- detection by the control unit **(9)** of the closed position of openings **(15L)** situated in the vicinity of a junction **(27)** between the processing unit **(4C)** detected as being shut down and the transfer system **(7);**
- if these openings **(15L)** are detected in closed position, commanding by the control unit **(9)** of the locking of these openings **(15L).**

2. Method according to Claim 1, **characterized in that** it comprises the following operation:
- if an opening **(15L)** situated level with the processing unit **(4)** detected as being shut down and at a distance from a junction **(27)** with the transfer system **(7)** is detected as being locked in closed position, unlocking of this opening.

3. Method according to Claim 1 or Claim 2, **characterized in that** it comprises the following operation:
- generation of a locking alert signal for any locked opening **(15L).**

4. Method according to Claim 3, **characterized in that** the alert signal is reflected by the lighting of a light indicator in the vicinity of the opening **(15L)** that is locked in closed position.

5. Installation **(1)** for handling hollow bodies, which comprises
- a plurality of units **(4)** for processing the hollow bodies **(2, 3);**
- a system **(7)** for transferring the hollow bodies **(2, 3)** between the processing units **(4),**
- a cowl **(10)** defining a closed enclosure **(11)** in which are housed the processing units **(4)** and the transfer system **(7),** this cowl **(10)** comprising:
∘ a frame **(12)** defining fixed sashes **(14),**
∘ openings **(15)** each mounted on a fixed sash **(14)** between an open position in which the opening **(15)** gives access to the enclosure **(11)** from the outside, and a closed position in which the opening **(15)** prevents access to the enclosure **(11)** from the outside;
∘ for each opening (**15**), a system **(17)** for locking the opening **(15)** in closed position;
- a control unit **(9);**
**characterized in that** the control unit **(9)** is programmed to:
- detect the shutting down of a processing unit **(4C)** ;
- detect the closed position of openings **(15L)** situated in the vicinity of a junction between the processing unit **(4C)** detected as being shut down and the transfer system **(7);**
- if these openings **(15L)** are detected in closed position, commanding the locking of these openings **(15L)**.

6. Installation **(1)** according to Claim 5, **characterized in that** the locking system **(17)** comprises a contactor **(21)** or a proximity sensor mounted on the fixed sash **(14)** and linked to the control unit (**9**).

7. Installation **(1)** according to Claim 5 or Claim 6, **characterized in that** the locking system **(17)** comprises an electromechanical lock **(18)** mounted on the fixed sash **(14)** and including:
- a bolt that is mobile between a locking position in which it cooperates with a strike **(19)** borne by the opening **(14),** and a release position in which it is separated from the strike **(19);**
- a mechanism **(20)** for blocking the bolt in locking position, linked to the control unit **(9)** and controlled there by the latter.
